# EUROPÄISCHE PATENTSCHRIFT

(11) **EP 3 445 607 B1**
(45) Veröffentlichungstag und Bekanntmachung des Hinweises auf die Patenterteilung: **03.03.2021**
(21) Anmeldenummer: 17700159.1
(22) Anmeldetag: 06.01.2017
(51) Int. Cl.: H02J 7/00, B60L 58/12

(54) **LADESYSTEM UND VERFAHREN ZUM BETREIBEN EINES LADESYSTEMS**
BATTERY CHARGING SYSTEM AND CORRESPONDING METHOD
CHARGEUR DE BATTERIE ET PROCEDE CORRESPONDANT

(30) Priorität: 20.04.2016 DE 102016107271
(43) Veröffentlichungstag der Anmeldung: 27.02.2019
(73) Patentinhaber: innogy SE, 45128 Essen (DE)
(72) Erfinder: WAFFNER, Dr. Jürgen, 45307 Essen (DE)
(74) Vertreter: Cohausz & Florack
(86) Internationale Anmeldenummer: PCT/EP2017/050244
(87) Internationale Veröffentlichungsnummer: WO 2017/182146

(56) Entgegenhaltungen:
- EP-A1- 2 662 949
- EP-A2- 2 737 591
- WO-A1-2013/023694
- DE-A1-102011 008 675
- DE-A1-102013 002 078
- DE-A1-102013 211 265
- US-A1- 2013 110 296
- US-A1- 2013 110 296
- Terry Cleveland ET AL: ""Developing Affordable Mixed-Signal Power Systems for Battery Charger Applications"", , 24. Juni 2015 (2015-06-24), XP055353632, Gefunden im Internet: URL:https://web.archive.org/web/2015072403 3559/http://www.microchip.com/stellent/gro ups/designcenter_sg/documents/market_commu nication/en027883.pdf [gefunden am 2017-03-10]
- Anonymous: "Integral - Wikipedia", , 10. April 2016 (2016-04-10), XP055353634, Gefunden im Internet: URL:https://en.wikipedia.org/w/index.php?t itle=Integral&oldid=714610718 [gefunden am 2017-03-10]
- Terry Cleveland ET AL: ""Developing Affordable Mixed-Signal Power Systems for Battery Charger Applications"", , 24 June 2015 (2015-06-24), XP055353632, Retrieved from the Internet: URL:https://web.archive.org/web/2015072403 3559/http://www.microchip.com/stellent/gro ups/designcenter_sg/documents/market_commu nication/en027883.pdf [retrieved on 2017-03-10]
- Anonymous: "Integral - Wikipedia", , 10 April 2016 (2016-04-10), XP055353634, Retrieved from the Internet: URL:https://en.wikipedia.org/w/index.php?t itle=Integral&oldid=714610718 [retrieved on 2017-03-10]
- Anonymous: "State of charge - Wikipedia", , 9 April 2015 (2015-04-09), XP055615620, Retrieved from the Internet: URL:https://en.wikipedia.org/w/index.php?t itle=State_of_charge&oldid=655675001#Curre nt_integration_method [retrieved on 2019-08-27]
- Anonymous: "Measure Li-ion cell capacity with an arduino", , 16 April 2016 (2016-04-16), XP055615622, Retrieved from the Internet: URL:https://web.archive.org/web/2016041609 0217/https://www.instructables.com/id/Ardu ino-cell-capacity-meter/ [retrieved on 2019-08-27]

## Beschreibung

Der Gegenstand betrifft ein Ladesystem, insbesondere für Elektrofahrzeuge, sowie ein Verfahren zum Betreiben eines solchen Ladesystems.

Das Laden von Elektrofahrzeugen, insbesondere das Laden der Traktionsbatterie von Elektrofahrzeugen, ist hinlänglich bekannt. Durch den Ausbau der Ladeinfrastruktur entstehen zunehmend Fragen der leistungsgerechten Abrechnung. In der Regel wird bei einem Laden mit Wechselstrom die zur Verfügung gestellte elektrische Energie mit einem hierfür geeichten Messgerät in einer Ladestation gemessen. Die gemessene Energie wird dann dem Nutzer der Ladestation gemäß einem vereinbarten Tarif berechnet. Im Fall des Ladens mit Gleichspannung ist jedoch die Messtechnik aufwendig und nur in geringen Stückzahlen verfügbar, so dass ein Messen der zur Verfügung gestellten elektrischen Energie beim Laden mit Gleichspannung hohe Investitionskosten erfordert.

Ebenfalls ist bekannt, dass eine Abrechnung zeitbasiert erfolgen kann. Bei einer solchen zeitbasierten Abrechnung wird jedoch bisher angenommen, dass über den gesamten Ladevorgang hinweg stets die gleiche elektrische Leistung durch die Ladestation zur Verfügung gestellt wird. Diese angenommene elektrische Leistung multipliziert mit der Zeit des Ladevorgangs ergibt die elektrische Energie, die zur Verfügung gestellt wurde. Dieses Abrechnungsmodel ist jedoch ungenau, da ein Ladesteuergerät innerhalb eines Elektrofahrzeugs stets eine Ladekurve durchläuft, bei der zu unterschiedlichen Zeiten unterschiedliche elektrische Leistungen abgerufen werden. Insbesondere nimmt die elektrische Leistung, die abgerufen wird, mit der Dauer des Ladevorgangs ab.

Die DE 10 2011008 675 A1 offenbart ein Verfahren zum Aufladen einer Batterie eines Fahrzeugs, wobei das Fahrzeug zum Aufladen der Batterie mit einer Aufladestation verbunden ist.

Die DE 10 2013 002 078 A1 zeigt ein Verfahren zum Aufladen eines elektrischen Energiespeichers eines Fahrzeugs, wobei der Energiespeicher mit einer Ladevorrichtung gekoppelt und zumindest ein Ladeprofil in Abhängigkeit von Nutzer-Vorgaben und Randbedingungen ermittelt und eingestellt wird.

Die EP 2 662 949 A1 offenbart eine Ladesteuerungsvorrichtung, die eine verbleibende Ladungserfassungseinheit umfasst, welche die verbleibende Ladung einer wiederaufladbaren Batterie für ein Elektrofahrzeug enthält.

Dem Gegenstand lag die Aufgabe zugrunde, eine zeitbasierte Abrechnung zur Verfügung zu stellen, welche eine hohe Genauigkeit hinsichtlich der erfassten elektrischen Energie aufweist.

Diese Aufgabe wird gegenständlich durch ein Ladesystem nach Anspruch 1 sowie ein Verfahren nach Anspruch 11 gelöst.

Es ist erkannt worden, dass bei einer zeitbasierten Abrechnung in der Regel eine hohe Unschärfe hinsichtlich der abgerechneten zu der tatsächlich zur Verfügung gestellten elektrischen Energie besteht. Ferner ist erkannt worden, dass vor einem Ladevorgang in der Regel ausreichend Informationen zur Verfügung stehen, um den Ladevorgang an eine Ladekurve, insbesondere eines Elektrofahrzeugs, anzupassen und somit im Vorhinein die tatsächliche Energiemenge berechnen zu können, welche bis zum Abschluss des Ladevorgangs zur Verfügung gestellt werden wird. Hierzu ist zunächst von Interesse, welchen Ladezustand die Batterie hat. Dieser Ladezustand, auch Ladepunkt genannt, ist charakteristisch für den weiteren Verlauf des Ladevorgangs. Der Ladepunkt gibt in der Regel die verbleibende Restkapazität der Batterie an. Der Ladepunkt ist auch abhängig von dem aktuellen Zustand der Batterie, der Batterietemperatur, dem Alter der Batterie oder dergleichen. Ein Ladepunkt kann durch ein an der Batterie angeordnetes Messgerät erfasst werden. Auch ist es möglich, dass die Erfassung des Ladepunktes durch ein von der Batterie abgesetztes Messgeräte erfolgt.

Die Batterie kann in einem Elektrofahrzeug angeordnet sein. Auch kann ein Ladesteuergerät zum Laden der Batterie in dem Elektrofahrzeug angeordnet sein.

Die Batterie kann aber z.B. auch eine Batterie als Photovoltaik (PV) Speicher eingesetzt sein. Auch hier kann ein Ladesteuergerät zum Einsatz kommen, welches den Ladevorgang der Batterie überwacht und steuert. Ein PV Speicher kann z.B. in einem Haus angeordnet sein, und durch die PV Anlage des Hauses gespeist werden. Es ist aber auch möglich, dass die Batterie von einer PV Anlage eines anderen Hauses gespeist wird und die Abrechnung zwischen den beiden beteiligten Haushalten durchgeführt wird.

Gegenständlich sind Erfassungsmittel vorgeschlagen, mit deren Hilfe ein Ladezustand einer Batterie erfasst wird. Unter die gegenständlichen Erfassungsmittel fallen mitunter nicht nur diejenigen Messeinrichtungen, die unmittelbar an einer Batterie angeordnet sind. Vielmehr können Erfassungsmittel auch in einer Ladestation oder einem mobilen Gerät angeordnet sein, und eine Information zu dem Ladezustand empfangen. Auch das Empfangen wird gegenständlich als Erfassen des Ladezustands verstanden.

Neben der Kenntnis des Ladezustands ist die Kenntnis der Ladekurve des Ladesteuergerätes bzw. der zu ladenden Batterie notwendig, um den Verlauf eines Ladevorgangs abschätzen zu können. Mit Hilfe einer Ladekurve wird in der Regel in einem Ladesteuergerät festgelegt, mit welcher elektrischen Leistung bei welchem Zustand der Batterie geladen wird. In der Regel verläuft die Ladekurve monoton fallend. Eine Batterie kann einen Ladepunkt zwischen 100% und 0% aufweisen. Der Ladepunkt 100% bedeutet, dass die Batterie vollständig entladen ist. In diesem Fall wird zum Laden der Batterie die gesamte Ladekurve durchlaufen. Mit sich veränderndem Zustand der Batterie, also mit zunehmender Ladung wird in der Regel die Batterie mit jeweils abnehmender Stromstärke geladen. Dieses Ladeverhalten wird in der Ladekurve abgebildet. Ist der Ladepunkt beispielsweise bei 0%, kann das bedeuten, dass die Batterie vollständig geladen ist und die Ladekurve vollständig durchlaufen wurde.

An dieser Stelle sei angemerkt, dass die Angabe von 100% und 0% lediglich beispielhaft zu verstehen ist. Die Ladekurve wird in der Regel bei einem Ladevorgang von dem aktuellen Zustand der Batterie aus gesehen bis zum Ende des Ladevorgangs, mithin bis zu einer vollständigen Ladung des Fahrzeugs, oder bis zum Abbrich des Ladevorgangs durchlaufen.

In Kenntnis der Ladekurve kann anschießend eine Ladestrategie entwickelt werden. Aus diesem Grunde sind Bestimmungsmittel vorgeschlagen, mit denen eine Ladekurve bestimmt werden kann. Die Ladekurve für einen aktuellen Ladevorgang kann jeweils stets ausgehend von dem erfassten Ladezustand bestimmt werden. In der Regel ist im Ladesteuergerät hinterlegt, mit welcher Ladekurve eine Batterie geladen wird. Auch kann diese Information extern vom Fahrzeug, beispielsweise in einer Datenbank, hinterlegt sein. Zum Bestimmen des Ladekurve kann entweder das Ladesteuergerät genutzt werden oder aber eine hiervon abgesetzte Einrichtung. Insbesondere können die Bestimmungsmittel in einer Ladestation oder einem mobilen Endgerät angeordnet sein. Die Bestimmungsmittel können zur Bestimmung der Ladekurve die entsprechenden Informationen laden.
In Kenntnis des Ladezustands als auch der Ladekurve, kann ein Ladepunkt auf der Ladekurve bestimmt werden. Ausgehend von diesem Ladepunkt kann ein Ladeprofil berechnet werden. Hierzu können Berechnungsmittel vorgesehen sein. Die Berechnungsmittel können entweder in dem Fahrzeug, dem Ladesteuergerät, einer hiervon abgesetzten Ladestation oder einem mobilen Endgerät angeordnet sein. Das Ladeprofil ist, um eine zeitbasierte Abrechnung zu ermöglichen, in Intervalle unterteilt, die jeweils eine bestimmte Zeit dauern und jeweils eine intervallspezifische elektrische Leistung aufweisen. D.h., dass sich das Ladeprofil aus mehreren aneinandergereihten Zeitintervallen zusammensetzt, bei denen jedes Zeitintervall vorzugsweise eine andere intervallspezifische Leistung aufweist. Somit ist es möglich, für jedes Zeitintervall die zur Verfügung gestellte elektrische Energie zu berechnen. Um sicherzustellen, dass die zur Verfügung gestellte elektrische Leistung jedes einzelnen Zeitintervalls auch von der Batterie angefordert wird, während die Ladekurve durchlaufen wird, wird vorgeschlagen, dass die Ladekurve die jeweilige elektrische Leistung eines Zeitintervalls begrenzt.

Die Berechnungsmittel können das Ladeprofil auch zusätzlich abhängig von externen Bedingungen bestimmten. So kann beispielsweise eine prognostizierte Ganglinie eines Generators, z.B. einer Einspeisung elektrischer Leistung aus einer regenerativen Quelle zur Bestimmung der Ladekurve zumindest in Teilen verwendet werden. Ein Generator kann z.B. eine Photovoltaikanlage, eine Windturbine, ein Biomassekraftwerk, eine Kraft-Wärme-Kopplungs Anlage oder dergleichen sein. Insbesondere kann eine Ganglinie einer Photovoltaikanlage relativ genau anhand einer Wetterprognose sowie historischen Ganglinien prognostiziert werden. Wenn die Ganglinie eines Generators bekannt ist, kann das Ladeprofil an diese Ganglinie angepasst sein. Insbesondere kann der Startpunkt des Ladevorgangs zeitlich verschoben werden, insbesondere verzögert werden, wenn die Ganglinie die Erzeugung elektrischer Leistung prognostiziert.

Dadurch, dass die Ladekurve die jeweilige elektrische Leistung eines Zeitintervalls begrenzt, wird sichergestellt, dass die zu jedem Zeitpunkt zur Verfügung gestellte elektrische Leistung die von dem Ladesteuergerät abgerufene elektrische Leistung nicht übersteigt. Insbesondere wird sichergestellt, dass stets die vom Ladesteuergerät abgerufene elektrische Leistung auch zur Verfügung gestellt wird. Die Zeitintervalle werden genutzt, um die zur Verfügung gestellte elektrische Energie zu berechnen. Ein Messen der elektrischen Leistung ist nicht mehr notwendig. Somit ist es möglich, ohne eine dezidierte Messung der während des Ladevorgangs abgerufenen elektrischen Leistung die zur Verfügung gestellte elektrische Energie zu bestimmen und entsprechend einem Abrechnungstarif abzurechnen.

Die Zeitintervalle können bildlich auch als Aneinanderreihung von "Energiescheiben" verstanden werden, wobei in jedem Zeitintervall eine konstante elektrische Leistung für eine bestimmte Zeit zur Verfügung gestellt wird, und sich hieraus die elektrische Energie für einen Zeitintervall ergibt. Somit wird durch die Berechnungsmittel eine vordefinierte Energie aus Leistung und Zeit berechnet, welche in etwa der Ladekurve entspricht.

Der Ladevorgang wird anschließend unter Verwendung des Ladeprofils, welches auch als Fahrplan verstanden werden kann, durchlaufen.

Auch ist es möglich, den Ladepunkt nach Ablauf eines jeden Intervalls neu zu bestimmen und das Ladeprofil anhand des dann bestimmten Ladepunktes anzupassen. Dies kann insbesondere dann sinnvoll sein, wenn für die Bestimmung des Ladeprofils die externen Bedingungen, wie z.B. die Ganglinie eines Generators, verwendet wurde, da ggf. die tatsächliche elektrische Leistung nicht mit der prognostizierten Leistung in einem Intervall übereinstimmt. Dann ist der Ladepunkt ein anderer, als prognostiziert und ggf. muss das Ladeprofil angepasst werden.

Gemäß einem Ausführungsbeispiel wird vorgeschlagen, dass die Erfassungsmittel eine Information zu dem Ladezustand der Batterie, insbesondere von einem Elektrofahrzeug, oder von einer Benutzerschnittstelle empfangen. Der Ladezustand einer Batterie kann durch ein Ladesteuergerät z.B. innerhalb eines Elektrofahrzeugs bestimmt werden. Insbesondere kann durch Bestimmung der Batterietemperatur, der Batteriespannung und des Batteriestroms der sogenannte State of Charge (SOC) bestimmt werden. Aus diesen Informationen lässt sich der Ladezustand ableiten. Diese Information kann den Erfassungsmitteln zur Verfügung gestellt werden. Die Erfassungsmittel müssen nicht zwingend in dem Elektrofahrzeug angeordnet sein, sondern können beispielsweise auch in einer Ladestation oder einem mobilen Endgerät, beispielsweise einem Mobiltelefon, einem Tablet Computer oder dergleichen eingerichtet sein.

Auch ist es möglich, dass der Ladezustand über eine Benutzerschnittstelle eingegeben wird. So ist es beispielsweise möglich, dass ein Nutzer an einem Fahrzeug eine Ladezustandsanzeige hat. Diese Ladezustandsanzeige kann der Nutzer dafür nutzen, um manuell über eine Nutzerschnittstelle den Ladezustand einzugeben. Diese manuelle Eingabe kann ebenfalls den Erfassungsmitteln zur Verfügung gestellt werden. Im Falle der Eingabe über ein mobiles Gerät kann es möglich sein, dass unmittelbar dort die Erfassungsmittel angeordnet sind. Auch kann es möglich sein, dass von dem mobilen Gerät der Ladezustand an eine Ladestation übermittelt wird.

Gemäß einem Ausführungsbeispiel wird vorgeschlagen, dass die Bestimmungsmittel eine Information zu einem Typ der Batterie oder von einer Benutzerschnittstelle empfangen. So wie der Ladezustand entweder in dem Kraftfahrzeug selbst oder extern hiervon beispielsweise über eine Benutzerschnittstelle erfasst werden kann, so kann auch ein Typ einer Batterie erfasst werden. Das oben Gesagte gilt hier entsprechend. Der Typ der Batterie ermöglicht es, dass die Bestimmungsmittel eine Ladekurve bestimmen. Die Ladekurve ist in der Regel zumindest abhängig von dem Typ der Batterie und kann für unterschiedliche Batterien unterschiedlich sein. In Kenntnis des Typs der Batterie können die Bestimmungsmittel beispielsweise eine Ladekurve aus einem Speicher laden. Der Speicher kann beispielsweise auch durch einen von den Bestimmungsmitteln abgesetzten, entfernten Rechner zur Verfügung gestellt werden. Über Datenkommunikation lässt sich abhängig vom Typ der Batterie eine Ladekurve von einem entfernten Rechner laden.

Gemäß einem Ausführungsbeispiel wird vorgeschlagen, dass die Bestimmungsmittel abhängig vom Typ der Batterie eine Ladekurve aus einem Speicher laden. Es kann beispielsweise eine Lookup Tabelle hinterlegt sein, aus der ersichtlich ist, für welchen Typ Batterie welche Ladekurve bestimmt ist. Eine entsprechend ermittelte Ladekurve kann dann aus dem Speicher durch die Bestimmungsmittel geladen werden.

Gemäß einem Ausführungsbeispiel wird vorgeschlagen, dass die Erfassungsmittel die Bestimmungsmittel und die Berechnungsmittel in einer Ladestation oder in einem mobilen Kommunikationsgerät angeordnet sind. Es ist möglich, dass in der Ladestation der Fahrplan bzw. das Ladeprofil berechnet wird. Hierzu ist es sinnvoll, wenn zumindest die Bestimmungsmittel und die Berechnungsmittel in der Ladestation angeordnet sind. Auch können die Erfassungsmittel in der Ladestation angeordnet sein. Auch ist es möglich, dass die Erfassungsmittel die Bestimmungsmittel und die Berechnungsmittel verteilt angeordnet sind, so können beispielsweise die Berechnungsmittel in der Ladestation angeordnet sein und die Erfassungsmittel als auch die Bestimmungsmittel in einem mobilen Endgerät. Insbesondere können die Erfassungsmittel, die Bestimmungsmittel und/oder die Berechnungsmittel in einer App eines mobilen Kommunikationsgeräts abgebildet sein. Hierzu wird ein Computerprogramm vorgeschlagen, in welchem die Erfassungsmittel, die Bestimmungsmittel und/oder Berechnungsmittel realisiert sind.

Das Computerprogramm kann auf einem mobilen Endgerät ablaufen und beispielsweise eine Benutzerschnittstelle generieren, über die der Ladezustand der Batterie eingebbar ist. Auch kann über die Benutzerschnittstelle ein Typ einer Batterie oder ein Typ eines Fahrzeugs eingegeben werden, aus dem dann der Typ der Batterie ermittelt werden kann. Die Bestimmungsmittel können in dem Computerprogramm derart programmiert sein, dass sie in Kenntnis des Typs der Batterie auf einen externen Speicher über ein Weitverkehrsnetz, insbesondere drahtlos, zugreifen und die entsprechende Ladekurve laden.

Es ist möglich, dass das Computerprogramm dazu eingerichtet ist, die geladene Ladekurve samt Information zum Ladezustand entweder an Berechnungsmittel, beispielsweise in einer Ladestation zu übermitteln, oder das die Berechnungsmittel unmittelbar in dem Computerprogramm realisiert sind. Die berechnete Ladekurve kann von dem mobilen Kommunikationsgerät beispielsweise an die Ladestation oder das Ladesteuergerät, z.B. in dem Elektrofahrzeug, übermittelt werden. Die Kommunikation zwischen mobilem Kommunikationsgerät, Ladestation und Ladesteuergerät kann beispielsweise drahtlos, beispielsweise über Nahfeldkommunikation, Bluetooth, WLAN, GSM, UMTS oder dergleichen erfolgen.

Gemäß einem Ausführungsbeispiel wird vorgeschlagen, dass das Ladeprofil eine Mehrzahl an Zeitintervallen umfasst. Je größer die Anzahl der Zeitintervalle, desto genauer bilden die Zeitintervalle das Ladeprofil ab. Die Zeitintervalle können als zeitdiskrete Abtastpunkte der Ladekurve verstanden werden.

Es hat sich herausgestellt, dass die Länge der Zeitintervalle vorteilhafterweise zwischen 1 Minute, 5 Minuten und 15 Minuten liegen kann. Auch ist es möglich, dass die Dauer der Zeitintervalle variabel ist. Insbesondere kann die Dauer der Zeitintervalle umgekehrt proportional zur Steigung der Ladekurve sein. D.h., dass wenn die Ladekurve in kurzer Zeit starke Veränderungen der Leistung aufweist, dass die Zeitintervalle dann kürzer sind, als in Zeiten, in denen die Ladekurve eine im Wesentlichen konstante Leistung anzeigt. Hierdurch wird sichergestellt, dass durch die Zeitintervalle die Ladekurve möglichst exakt abgebildet wird, was zu einer exakten Abrechnung der zur Verfügung gestellten elektrischen Energie führt.

Für jedes Zeitintervall wird eine maximale Ladeleistung bestimmt. Die maximale Ladeleistung ist in der Regel derart, dass in einem Zeitintervall die Ladeleistung stets unterhalb der Ladekurve liegt. Dies stellt sicher, dass die abgerechnete Energie niemals größer ist, als die tatsächlich zur Verfügung gestellte Energie. Es kann sichergestellt werden, dass zu jedem Zeitintervall die abgerufene Leistung unterhalb oder gleich derer ist, die durch die Ladekurve bestimmt ist.

Für jedes Zeitintervall wird das Produkt aus Zeit mal maximaler Leistung berechnet. Dieses Produkt stellt die in einem Zeitintervall zur Verfügung gestellte elektrische Energie dar. Diese so berechnete Energie wird über alle Zeitintervalle aufsummiert und eine Gesamtenergie berechnet. Die hieraus resultierende elektrische Energie wird als Information bereitgestellt, mit der anschließend eine Abrechnung erfolgen kann.

Gemäß einem Ausführungsbeispiel wird vorgeschlagen, dass die Berechnungsmittel eine Information zu einem maximalen Ladestrom empfangen. Es ist erkannt worden, dass anhand der Ladekurve elektrische Leistungen bestimmt werden können, die durch die elektrische Spannung und den elektrischen Strom bestimmt sind. Insbesondere die Höhe des Ladestroms kann jedoch problematisch sein, da beispielsweise der Ladestrom nicht von allen beim Ladevorgang beteiligten Komponenten getragen werden können. So ist es beispielsweise möglich, dass ein Ladekabel nur für einen maximalen Ladestrom ausgelegt ist, der geringer ist, als der sich aus der Ladekurve ergebende maximale Ladestrom. Dies ist insbesondere dann relevant, wenn die Ladespannung gering ist.

Um sicherzustellen, dass die Berechnungsmittel die Zeitintervalle so bestimmen, dass die jeweils intervallspezifische elektrische Leistung auch abgerufen werden kann, insbesondere der Ladestrom durch die beteiligten Komponenten beschädigungsfrei geführt werden kann, empfangen die Berechnungsmittel die Information zu dem maximalen Ladestrom. Die Information über den maximalen Ladestrom kann dabei beispielsweise über ein Abfragemittel in der Ladestation für das jeweilige Ladekabel erfolgen. Ein Ladekabel kann beispielsweise über einen Widerstand so codiert sein, dass hierüber der über das Kabel fließende maximale Ladestrom bestimmt werden kann. Diese Information kann bereitgestellt werden. Mit Hilfe der Berechnungsmittel wird die maximale Leistung pro Zeitintervall so berechnet, dass der maximale Ladestrom nicht überschritten wird.

Gemäß einem Ausführungsbeispiel wird vorgeschlagen, dass die Ladestation mit Hilfe des Ladeprofils einen maximalen Ladestrom bestimmt. Wie bereits erläutert, kann die Ladestation den maximalen Ladestrom von dem hieran angeschlossenen Ladekabel bestimmen. Es kann auch beispielsweise über eine Kommunikation mit dem Elektrofahrzeug bzw. dem Ladesteuergerät erfasst werden, welchen maximalen Ladestrom das Elektrofahrzeug bzw. das Ladesteuergerät tragen kann. Mit Hilfe des Ladeprofils kann die Ladestation einen maximalen Ladestrom bestimmen. Es ist möglich, dass das Ladeprofil außerhalb der Ladestation berechnet wird und in der Ladestation empfangen wird. Dies ist insbesondere dann der Fall, wenn das Ladeprofil in einem mobilen Endgerät berechnet wird. Die Ladestation kann prüfen, ob die an die Ladestation angeschlossene Ladegarnitur und/oder ein an die Ladestation angeschlossenes Ladesteuergerät und/oder Elektrofahrzeug für den maximalen Strom ausgelegt sind. Nur wenn der maximale Ladestrom bestätigt ist, kann der Ladevorgang gestartet werden.

Auch ist es möglich, dass die Ladestation das Ladeprofil empfängt und abhängig von dem empfangenen Ladeprofil ein Ladesteuergerät z.B. in einem Elektrofahrzeug ansteuert. Auch ist es möglich, dass das Ladeprofil in der Ladestation berechnet wird. Durch Kommunikation mit dem Elektrofahrzeug bzw. einem Ladesteuergerät z.B. innerhalb des Elektrofahrzeugs, kann die Ladestation sicherstellen, dass das Ladesteuergerät entsprechend dem Ladeprofil den Ladevorgang vornimmt. Hierzu kann beispielsweise eine Kommunikation über einen Pilotleiter einer Ladegarnitur zwischen der Ladestation und dem Ladesteuergerät erfolgen. Über den Pilotleiter kann die Ladestation für jedes Zeitintervall, d.h. zu Beginn eines jeden Zeitintervalls, dem Ladesteuergerät den jeweils intervallspezifischen Ladestrom anzeigen. Das Ladesteuergerät stellt den Ladestrom dann entsprechend des Ladeprofils ein und lädt für die Dauer des Zeitintervalls mit dem entsprechenden Ladestrom. Die Ladestation behält somit die Steuerfunktion für das Ladeprofil und das Ladesteuergerät durchläuft lediglich das Ladeprofil abhängig von Informationen von der Ladestation.

Auf der anderen Seite ist es auch möglich, dass das Ladesteuergerät das Ladeprofil kennt und abhängig von dem Ladeprofil den Ladevorgang steuert. In diesem Fall kann beispielsweise eine Kommunikation zwischen Ladestation und Ladesteuergerät hinsichtlich der jeweilig intervallspezifischen Leistung bzw. des intervallspezifischen Stroms entfallen. Das Ladesteuergerät kann das Ladeprofil entweder selbst berechnen oder beispielsweise von einem mobilen Endgerät oder der Ladestation empfangen. Das Ladesteuergerät kann dann dieses Ladeprofil durchlaufen. Die Information, die zur Abrechnung relevant ist, kann von dem Gerät, welches das Ladeprofil berechnet hat, bereitgestellt werden und beispielsweise an eine Abrechnungszentrale übermittelt werden.

Auch ist es möglich, dass das Ladesteuergerät als auch die Ladestation das Ladeprofi kennen. Das Ladeprofil kann in diesem Fall entweder in einem mobilen Endgerät, der Ladestation und/oder dem Ladesteuergerät berechnet worden sein. Ist das Ladeprofil sowohl in dem Ladesteuergerät als auch in der Ladestation bekannt, kann das Ladesteuergerät das Ladeprofil während des Ladevorgangs durchlaufen. Die Ladestation kann überprüfen, ob sich das Ladesteuergerät an das vorgegebene Ladeprofil hält. Hierdurch kann sichergestellt werden, dass das Ladesteuergerät nicht mehr elektrische Leistung abruft, als dies durch das Ladeprofil vorgegeben ist. Im Falle des Überschreitens einer Leistung in einem Zeitintervall kann die Ladestation den Ladevorgang abbrechen, da dann die Abrechnung der elektrischen Energie nicht mehr dem entspricht, was die Ladestation zur Verfügung stellen würde.

Auch ist es möglich, dass das Ladeprofil in dem Ladesteuergerät bekannt ist. Anschließend kann das Ladesteuergerät das Ladeprofil bzw. eine Information zu einem maximalen Ladestrom abhängig von dem Ladeprofil an die Ladestation senden. Insbesondere kann das Ladesteuergerät eine Ladeanfrage mit dem maximalen Ladestrom an die Ladestation übermitteln. Diese Übermittlung kann drahtlos oder drahtgebunden, insbesondere auch über einen Pilotleiter erfolgen. Wenn die Ladestation signalisiert, dass sie den maximalen Ladestrom zur Verfügung stellen kann, erfolgt die Signalisierung der Ladebereitschaft gegenüber dem Ladesteuergerät und das Ladesteuergerät kann den Ladevorgang vornehmen.

Abrechnungsmittel können vorgesehen sein, die Informationen zu einer bestimmten elektrischen Energie empfangen. Die bestimmte elektrische Energie wurde aus den Zeitintervallen berechnet. Die Abrechnungsmittel können entweder in einem mobilen Endgerät oder der Ladestation angeordnet sein. Auch ist es möglich, dass die Abrechnungsmittel entfernt hiervon, beispielsweise in einer Abrechnungszentrale, angeordnet sind. Mit Hilfe der Informationen zu der bestimmten elektrischen Energie können abrechnungsrelevant Daten errechnet werden.

Je kürzer die Zeitintervalle sind, desto genauer wird durch die Zeitintervalle die Ladekurve abgebildet. Auf der anderen Seite sollte die Anzahl der Zeitintervalle begrenzt sein, um den Ladevorgang nicht zu häufig zu verändern. Durch eine geeignete Wahl der Länge bzw. Anzahl der Zeitintervalle wird sichergestellt, dass die aus dem Ladeprofil bestimmte elektrische Energie pro Zeitintervall in etwa der aus der Ladekurve bestimmten elektrischen Energie für das entsprechende Zeitintervall entspricht. Vorzugsweise ist die aus dem Ladeprofil bestimmte elektrische Energie pro Zeitintervall etwas kleiner als die aus der Ladekurve bestimmte elektrische Energie für das entsprechende Zeitintervall. Dies kann daran liegen, dass das die Ladekurve für jedes Zeitintervall die maximale Leistung nach oben begrenzt.

Insbesondere hat sich als vorteilhaft herausgestellt, wenn die Ladekurve das Ladeprofil als einhüllende begrenzt. Die Ladekurve stellt somit stets die Obergrenze für eine elektrische Leistung pro Zeitintervall am Ende eines jeweiligen Zeitintervalls dar. D.h., dass zu Beginn eines Zeitintervalls die elektrische Leistung gemäß der Ladekurve oberhalb der elektrischen Leistung, welche intervallspezifisch bestimmt wurde, liegt. Zum Ende des Zeitintervalls ist dann vorteilhafterweise die intervallspezifische elektrische Leistung gleich der an diesem Ladepunkt der Ladekurve maßgeblichen elektrischen Leistung.

Ein Ladesteuergerät wird in der Regel mit verschiedenen Leistungsstufen betrieben. Die Leistungsstufen können statisch oder dynamisch in dem Ladesteuergerät hinterlegt sein. Insbesondere können Leistungsschritte, beispielsweise 12kW, 11,5kW, 11,3kW, 11kW, 10kW und so weiter in Abstufungen in dem Ladesteuergerät hinterlegt sein. Die Leistungsstufen des Ladesteuergeräts können ermittelt werden und das Ladeprofil kann pro Zeitintervall eine elektrische Leistung bestimmen, die einer der ermittelten Leistungsstufen entspricht. Somit wird sichergestellt, dass das Ladeprofil exakt durch das Ladesteuergerät abgebildet werden kann.

Zur Abrechnung wird die Summe der aus den Zeitintervallen bestimmten elektrischen Energie bestimmt und als abrechnungsrelevante Informationen bereitgestellt.

Nachfolgend wird der Gegenstand anhand einer Ausführungsbeispiele zeigenden Zeichnung näher erläutert. In der Zeichnung zeigen:
- Fig. 1: den Aufbau eines gegenständlichen Ladesystems;
- Fig. 2: ein mobiles Endgerät eingerichtet zur Durchführung des gegenständlichen Verfahrens;
- Fig. 3: den Aufbau einer gegenständlichen Ladestation;
- Fig. 4a: den Verlauf einer Ladekurve;
- Fig. 4b: den Verlauf eines Ladeprofils mit konstanten Zeitintervallen;
- Fig. 4c: den Verlauf eines Ladeprofils mit variablen Zeitintervallen.

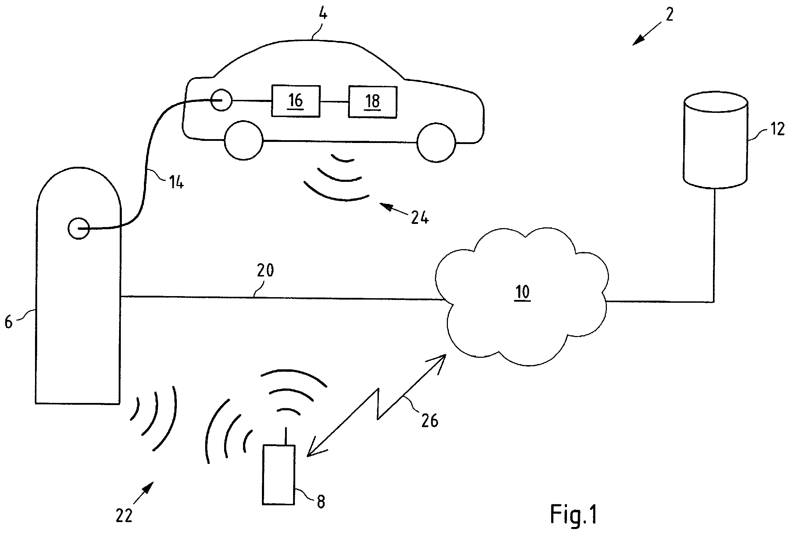

Fig. 1 zeigt ein Ladesystem 2 mit einem Elektrofahrzeug 4, einer Ladestation 6, einem mobilen Endgerät 8, einem Weitverkehrsnetz 10 sowie einem Server 12.

Das Elektrofahrzeug 4 ist mit der Ladestation 6 über ein Ladekabel 14 verbunden. In dem Elektrofahrzeug 4 können ein Ladesteuergerät 16 sowie eine Batterie 18 angeordnet sein.

Die Ladestation 6 ist beispielsweise über eine Kommunikationsverbindung 20, entweder drahtgebunden oder drahtlos über das Weitverkehrsnetz 10 mit dem Server 12 verbunden.

Zwischen der Ladestation 6 und dem mobilen Endgerät 8 kann eine Funkkommunikation 22, beispielsweise mittels Bluetooth, WLAN, NFC oder dergleichen stattfinden. Zwischen dem mobilen Endgerät 8 und dem Elektrofahrzeug 4 kann ebenfalls eine Funkverbindung 24 mit einem der genannten Protokolle stattfinden. Insbesondere findet hierüber die Funkverbindung 24 zwischen dem Ladesteuergerät 16 und dem mobilen Endgerät 8 statt.

Auch kann eine (nicht gezeigte) Funkverbindung zwischen der Ladestation 6 und dem Elektrofahrzeug 4 bzw. dessen Ladesteuergerät 16 nach den genannten Protokollen etabliert sein.

Schließlich kann das mobile Endgerät 8 über eine Funkverbindung 26 und das Weitverkehrsnetz 10 mit dem Server 12 verbunden sein.

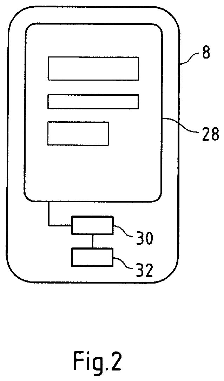

Zum Betrieb des gegenständlichen Verfahrens kann das mobile Endgerät 8 entsprechend der Fig. 2 eingerichtet sein. In dem mobilen Endgerät 8 können eine Benutzerschnittstelle 28 beispielsweise ein Touchdisplay sowie ein Mikroprozessor 30 und ein Speicher 32 angeordnet sein. In dem Speicher 32 kann ein Computerprogramm gespeichert sein, welches über den Mikroprozessor 30 geladen werden kann. Das Computerprogramm kann die Erfassungsmittel, die Bestimmungsmittel und die Berechnungsmittel enthalten. Zunächst kann mittels der Erfassungsmittel der Mikroprozessor so angesteuert werden, dass über die Benutzerschnittstelle 28 der Benutzer abgefragt wird, wie der Ladezustand der Batterie 18 ist. Diesen Ladezustand kann der Benutzer beispielsweise über ein Display in dem Elektrofahrzeug 4 ablesen und über die Benutzerschnittstelle 28, beispielsweise ein Touchdisplay, eingeben. Anschließend kann das Computerprogramm den Prozessor 30 derart ansteuern, dass dieser über die Benutzerschnittstelle 28 den Nutzer über den Typ des Elektrofahrzeugs 4 bzw. den Typ der Batterie 18 abfragt. Der Nutzer kann dann über die Nutzerschnittstelle 28 den Typ wiederum eingeben.

Anschließend können die Bestimmungsmittel in dem Computerprogramm den Prozessor dazu anregen, eine Mobilfunkkommunikation über die Funkverbindung 26 und das Weitverkehrsnetz 10 mit dem Server 12 aufzunehmen. Über diese Verbindung 26 wird eine Information zu dem Typ der Batterie an den Server 12 übermittelt. Dort wird abhängig von dem Typ eine Ladekurve aus einem Speicher geladen und über die Kommunikationsverbindung 26 an das mobile Endgerät 8 übermittelt.

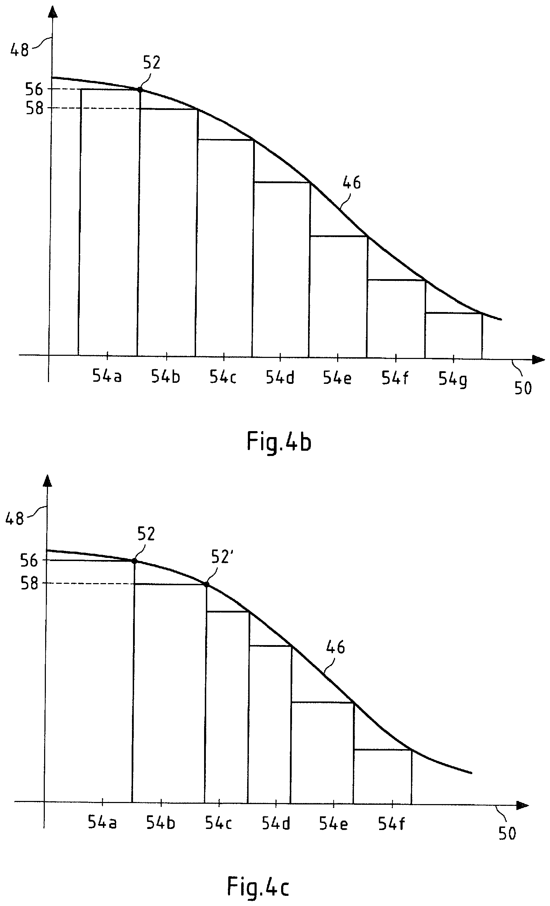

Somit sind in dem mobilen Endgerät 8 neben dem Ladepunkt, also dem Ladezustand der Batterie, auch die Ladekurve für diese Batterie 18 bekannt. Anschließend kann ausgehend von dem Ladezustand unter Verwendung der Ladekurve der Prozessor 30 durch das Computerprogramm bzw. dessen Berechtigungsmittel angeleitet werden, ein Ladeprofil zu berechnen. Ein solches Ladeprofil ist in den Fig. 4b und c gezeigt und wird nachfolgend diskutiert werden.

Über die Funkverbindung 22 kann das mobile Endgerät 8 das berechnete Ladeprofil beispielsweise an die Ladestation 6 übermitteln. Über die Funkverbindung 24 kann das mobile Endgerät 8 das Ladeprofil an das Elektrofahrzeug 4 bzw. das Ladesteuergerät 16 übermitteln.

Ist das Ladeprofil beispielsweise in der Ladestation 6 bekannt, kann in der Ladestation 6 zunächst aus dem Ladeprofi der maximale Ladestrom bestimmt werden. Ob die Ladestation 6 mit diesem maximalen Ladestrom laden kann, kann die Ladestation 6 abfragen. Hierzu kann die Ladestation 6 beispielsweise das Ladekabel 14 abfragen, ob dieses für den maximalen Ladestrom ausgelegt ist. Dies kann beispielsweise über die Abfrage einer Widerstandscodierung des Ladekabels 14 erfolgen.

Auch ist es möglich, dass die Ladestation 6 bei dem Ladesteuergerät 16 die Ladebereitschaft mit dem maximalen Ladestrom über das Ladekabel 14 abfragt. Signalisiert das Ladesteuergerät 16 seine Ladebereitschaft, kann die Ladestation den Ladevorgang initiieren. Während dieses Ladevorgangs kann die Ladestation 6 über das Ladekabel 14 oder über eine sonstige Kommunikation mit dem Ladesteuergerät 16 für jedes Zeitintervall den Ladestrom bzw. die Ladeleistung mitteilen. Das Ladesteuergerät 16 kann den Ladestrom entsprechend einstellen und gemäß des Ladeprofils elektrische Leistung von der Ladestation 6 über das Ladekabel 14 abrufen.

Auch ist es möglich, dass das mobile Endgerät 8 über die Funkverbindung 22 das Ladeprofil an die Ladestation 6 übermittelt und über die Funkverbindung 24 das Ladeprofil an das Ladesteuergerät 16. Dann ist es nicht mehr notwendig, dass die Ladestation 6 nach Signalisierung der Ladebereitschaft dem Ladesteuergerät 16 mitteilt, mit welcher Ladeleistung bzw. welchem Ladestrom für das jeweilige Zeitintervall zu laden ist.

Auch ist es möglich, dass das mobile Endgerät 8 über die Funkverbindung 24 das berechnete Ladeprofil nur an das Ladesteuergerät 16 des Elektrofahrzeugs 4 übermittelt.

In dem Ladesteuergerät 16 kann ein maximaler Ladestrom aus dem Ladeprofil berechnet werden. Anschließend kann das Ladesteuergerät 16 über das Ladekabel 14 an der Ladestation 6 abfragen, ob die Ladestation 6 für die Bereitstellung des maximalen Ladestroms ausgelegt ist. Entsprechend kann das Ladesteuergerät 16 auch über beispielsweise eine Widerstandscodierung abfragen, ob das Ladekabel 14 für den maximalen Ladestrom geeignet ist. Ist dies der Fall, kann das Ladesteuergerät 16 bei der Ladestation 6 eine Ladefreigabe anfordern und den Ladevorgang entsprechend des Ladeprofils durchlaufen.

Nachdem die Ladestation 6 und das Elektrofahrzeug 4 den Ladevorgang begonnen haben, kann die Ladestation 6 oder das Elektrofahrzeug 4 den mobilen Endgerät 8 den Beginn des Ladevorgangs signalisieren. Ein Ende des Ladevorgangs kann entsprechend dem mobilen Endgerät 8 signalisiert werden. Das mobile Endgerät 8 kann das Ladeprofil über die Funkverbindung 26 durch den Prozessor 30 berechnete abrechnungsrelevante Daten an den Server 12 senden. In dem Server 12 kann bei Empfang des Ladeprofis mit Hilfe von Abrechnungsmitteln die zur Verfügung gestellte elektrische Energie bestimmt werden und hieraus abrechnungsrelevante Daten, die anschließend gemäß einem vereinbarten Tarif in Rechnung gestellt werden.

In diesem Zusammenhang sei angemerkt, dass nicht stets das gesamte Ladeprofil durchlaufen werden muss. Vielmehr wird das Ladeprofil bis zu einem Ende eines Ladevorgangs durchlaufen. In diesem Fall kann überprüft werden, welche Zeitintervalle des Ladeprofils tatsächlich abgerufen wurden und hieraus können die tatsächlichen abrechnungsrelevanten Daten, insbesondere die tatsächlich zur Verfügung gestellte elektrische Energie berechnet werden.

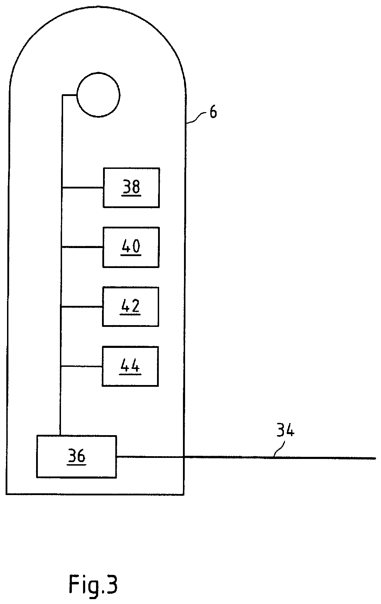

So wie die Berechnung des Ladeprofils in dem mobilen Endgerät 8 mittels des Computerprogramms möglich ist, so kann das Ladeprofil auch in der Ladestation 6 berechnet werden. Die Ladestation 6 ist, wie in Fig. 3 gezeigt, mit einem Ortsverteilnetz 34 elektrisch verbunden. Über eine entsprechende Ladeelektronik 36 kann die Ladestation 6 den Ladevorgang steuern. Zusätzlich zu der herkömmlichen Ladeelektronik 36 können in der Ladestation 6 Erfassungsmittel 38, Bestimmungsmittel 40, Berechnungsmittel 42 und Kommunikationsmittel 44 angeordnet sein. Die Bestimmungsmittel 38 können über eine Kommunikationsverbindung von dem Ladekabel 16 beispielsweise den Ladezustand erfassen. Auch ist es möglich, dass die Erfassungsmittel 38 von dem mobilen Endgerät 8 den Ladezustand empfangen, der beispielsweise von dem Nutzer eingegeben wurde.

Die Bestimmungsmittel 40 können aus einem in der Ladestation 6 eingebauten Speicher die Ladekurve laden. Auch ist es möglich, dass die Bestimmungsmittel 40 über eine Funkverbindung oder das Ladekabel 14 von dem Ladesteuergerät 16 die Ladekurve empfangen. Auch können die Bestimmungsmittel 40 über die Kommunikationsverbindung 20 von dem Server 12 die Ladekurve empfangen.

Die Berechnungsmittel 42 können in Kenntnis der Ladekurve als auch des Ladezustands das Ladeprofil entsprechend berechnen.

Mit Hilfe der Kommunikationsmittel 44 kann das Ladeprofil oder abrechnungsrelevante Daten über die Kommunikationsverbindung 20 an den Server 12 übermittelt werden.

Nachdem die Berechnungsmittel 42 das Ladeprofil bestimmt haben, können die Berechnungsmittel 42 die Ladeelektronik 36 anweisen, mit dem Ladesteuergerät 16 derart zu kommunizieren, dass dieses das Ladeprofil entsprechend der Berechnung durchläuft. Zum Ende des Ladevorgangs können die Berechnungsmittel 42 die tatsächlich zur Verfügung gestellte elektrische Energie durch eine Summierung der tatsächlich durchlaufenden Intervalle berechnen und mittels der Kommunikationsmittel 44 an den Server 12 als abrechnungsrelevante Daten senden. In dem Server 12 kann dann eine Abrechnung der zur Verfügung gestellten Energie erfolgen.

Eine Verteilung der Erfassungsmittel 38, Bestimmungsmittel 40 und Berechnungsmittel 42 zwischen dem mobilen Endgerät 8 und der Ladestation 6 ist möglich. Auch können Teile von diesen in dem Ladesteuergerät 16 gebildet sein. Auch ist es möglich, dass die Funktionen, die zuvor im Zusammenhang mit dem mobilen Endgerät 8 beschrieben wurden, in dem Ladesteuergerät 16 durchgeführt werden.

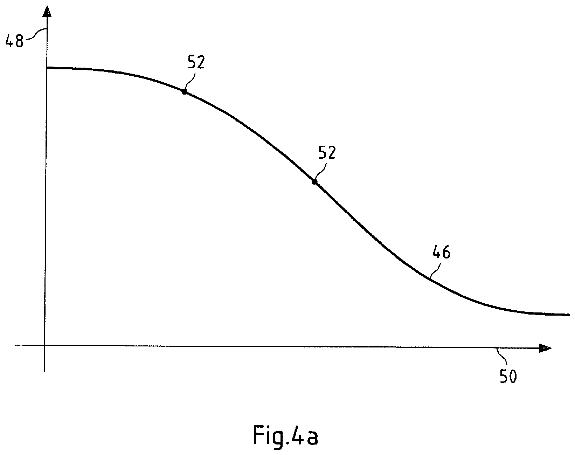

Fig. 4a zeigt eine Ladekurve 46. Die Ladekurve 46 zeigt den Verlauf der Ladeleistung 48 abhängig von der Zeit 50 auf. Die Ladekurve 46 wird durchlaufen, wenn die Batterie 18 von der vollständigen Entleerung bis zur vollständigen Ladung geladen wird.

Abhängig von einem Ladezustand der Batterie 18 können Ladepunkte 52 auf der Ladekurve 46 bestimmt werden. Die Ladepunkte 52 können abhängig von dem relativen Ladezustand der Batterie 18 bestimmt werden. Je nachdem wie der Ladezustand ist, ist ein Ladepunkt 52 auf der Ladekurve 46 angeordnet.

Nachdem ein Ladezustand erfasst wurde, kann ein Ladepunkt 52 auf der Ladekurve 46 bestimmt werden. Sobald ein Ladepunkt 52 bestimmt wurde, können, wie in Fig. 4b dargestellt, eine Mehrzahl an Zeitintervallen bestimmt werden. Insbesondere ist die Dauer der jeweiligen Zeitintervalle 54 konstant. Über den Ladepunkt 52 lässt sich die maximale Leistung 56 bestimmen. Diese maximale Leistung 56 bestimmt die intervallspezifische Leistung eines, hier des ersten Zeitintervalls 54a. Für das darauffolgende Zeitintervall 54b wird ermittelt, wie die elektrische Leistung 58 zum Zeitpunkt des Endes des Intervalls 54 abhängig von der Ladekurve 46 sein wird, und die maximale intervallspezifische Leistung 58 wird für das gesamte Intervall 54 berechnet.

Dies wird für alle Intervalle 54a-g durchgeführt. Die Summe der Intervalle 54a-g stellt das Ladeprofil dar.

Zu erkennen ist, dass für jedes Intervall eine intervallspezifische Leistung 56, 58 berechnet wurde. Ferner ist zu erkennen, dass die Ladekurve 46 die Intervalle 54a-g als einhüllendes begrenzt und eine elektrische Leistung 56, 58 eines jeden Intervalls 54a-g stets unterhalb der elektrischen Leistung der Ladekurve 46 liegt. Maximal zum Ende des Intervalls 54a-g ist die Leistung 56, 58 entsprechend der durch die Ladekurve 46 vorgegebenen elektrischen Leistung.

Die zur Verfügung gestellte elektrische Energie lässt sich berechnen aus der Dauer des Intervalls 54a-g multipliziert mit der jeweils intervallspezifischen Leistung 56, 58. Durch Aufsummieren der Intervalle 54a-g ergibt sich die zur Verfügung gestellte elektrische Energie. Diese Information kann dem Server 12 zur Verfügung gestellt werden, um dort mittels Abrechnungsmittel abrechnungsrelevante Daten zu errechnen.

Fig. 4b zeigt gleichlange Intervalle 54a-g, es ist jedoch auch möglich, dass die Intervalle unterschiedlich lang sind, wie in der Fig. 4c dargestellt ist.

Die Steigung der Ladekurve 46 ist unterschiedlich und kann beispielsweise zu Beginn als auch zum Ende eines Ladevorgangs flacher sein, als in der Mitte eines Ladevorgangs. Die Dauer eines Intervalls 54a-f kann abhängig von der Steigung der Ladekurve 46 sein. Für den Ladepunkt 52 wird der Gradient der Ladekurve 46 bestimmt und hieraus die Dauer des Zeitintervalls 54a. Dann wird für den Ladepunkt 52 bestimmt, wie groß die elektrische Leistung 56 für das Intervall 54a ist.

Anschließend wird der Gradient der Ladekurve 46 jenseits des Ladepunkts 52 berechnet und hieraus die Dauer des Zeitintervalls 54. Ist die Dauer des Zeitintervalls 54 bekannt, so wird ein neuer, virtueller Ladepunkt 52' bestimmt. Dieser Ladepunkt bestimmt die für das Intervall 54b maximale elektrische Leistung 58. Dieser Vorgang wird für die weiteren Intervalle 54c-f durchgeführt und hieraus das dargestellte Ladeprofil berechnet.

Durch die Berechnung der Ladeprofile ist es möglich, ohne eine Strommessung durchzuführen, eine exakte Abrechnung der zur Verfügung gestellten Energie zu gewährleisten.

### Bezugszeichenliste

- 2: Ladesystem
- 4: Elektrofahrzeug
- 6: Ladestation
- 8: mobiles Endgerät
- 10: Weitverkehrsnetz
- 12: Server
- 14: Ladekabel
- 16: Ladesteuergerät
- 18: Batterie
- 20: Kommunikationsverbindung
- 22, 24, 26: Funkverbindung
- 28: Nutzerschnittstelle
- 30: Prozessor
- 32: Speicher
- 34: Ortsnetz
- 36: Ladeelektronik
- 38: Erfassungsmittel
- 40: Bestimmungsmittel
- 42: Berechnungsmittel
- 44: Kommunikationsmittel
- 46: Ladekurve
- 48: Leistung
- 50: Zeit
- 52, 52': Ladepunkte
- 54: Zeitintervalle
- 56, 58: intervallspezifische Leistun

## Patentansprüche

1. Ladesystem (2) umfassend,
Erfassungsmittel (38) eingerichtet zur Erfassung eines Ladezustands einer Batterie (16) vor einem Beginn eines Ladevorgangs,
- Bestimmungsmittel (40) eingerichtet zur Bestimmung einer Ladekurve (46) für die Batterie (16) ausgehend von dem erfassten Ladezustand der Batterie (16) und
- Berechnungsmittel (42) eingerichtet zur Berechnung eines Ladeprofils, welches aus zumindest zwei Zeitintervallen (54) mit jeweils einer intervallspezifischen, konstanten elektrischen Leistung (48) gebildet ist, wobei die Ladekurve (46) die jeweilige elektrische Leistung (48) innerhalb eines Zeitintervalls begrenzt, wobei
- die Berechnungsmittel (42) die jeweiligen Produkte aus Zeit (50) pro Zeitintervall und der intervallspezifischen Leistung (48) über zumindest zwei Intervalle aufsummieren und eine hieraus resultierende elektrische Energie bestimmen und Informationen zu der bestimmten elektrische Energie bereitstellen,
**dadurch gekennzeichnet, dass**
- die Ladekurve (46) das Ladeprofil als Einhüllende begrenzt, so dass zum Ende jedes Intervalls die intervallspezifische Leistung (56, 58) der durch die Ladekurve (46) vorgesehenen Leistung (48) entspricht.

2. Ladesystem (2) nach Anspruch 1,
**dadurch gekennzeichnet,**
- **dass** die Erfassungsmittel (38) eine Information zu dem Ladezustand von: der Batterie (16) oder von einer Benutzerschnittstelle (28) empfangen.

3. Ladesystem (2) nach Anspruch 1 oder 2,
**dadurch gekennzeichnet,**
- **dass** die Bestimmungsmittel (40) eine Information zu einem Typ der Batterie (16) empfangen, und
- **dass** die Bestimmungsmittel (40) abhängig vom Typ der Batterie (16) eine Ladekurve (46) aus einem Speicher (32) laden.

4. Ladesystem (2) nach einem der vorangehenden Ansprüche,
**dadurch gekennzeichnet,**
- **dass** die Berechnungsmittel (42) eine Information zu einem maximalen Ladestrom empfangen und eine maximale Leistung (48) für eines der Zeitintervalle (54) abhängig von dem maximalen Ladestrom bestimmen.

5. Ladesystem (2) nach einem der vorangehenden Ansprüche,
**dadurch gekennzeichnet,**
- **dass** die Erfassungsmittel (38), die Bestimmungsmittel (40) und die Berechnungsmittel (42) in einer Ladestation (6) oder in einem mobilen Kommunikationsgerät angeordnet sind.

6. Ladesystem (2) nach einem der vorangehenden Ansprüche,
**dadurch gekennzeichnet,**
- **dass** das Ladeprofil eine Mehrzahl an Zeitintervallen (54) umfasst und/oder
- **dass** für jedes Zeitintervall eine maximale Ladeleistung bestimmt ist.

7. Ladesystem (2) nach einem der vorangehenden Ansprüche,
**dadurch gekennzeichnet,**
- **dass** eine Ladestation (6) das Ladeprofil empfängt und abhängig von dem empfangenen Ladeprofil ein Ladesteuergerät (14) ansteuert.

8. Ladesystem (2) nach Anspruch 7,
**dadurch gekennzeichnet,**
- **dass** die Ladestation (6) mit Hilfe des Ladeprofils einen maximalen Ladestrom bestimmt und dass die Ladestation (6) prüft, ob eine an die Ladestation (6) angeschlossene Ladegarnitur und/oder ein an die Ladestation (6) angeschlossenes Ladesteuergerät (14) für den maximalen Ladestrom ausgelegt ist.

9. Ladesystem (2) nach einem der vorangehenden Ansprüche 7 oder 8,
**dadurch gekennzeichnet,**
- **dass** die Ladestation (6) eine Ladeanfrage entsprechend eines Ladeprofils von einem Ladesteuergerät (14) empfängt, dass die Ladestation (6) prüft, ob sie den aus dem Ladeprofil bekannten maximalen Ladestrom bereitstellen kann und dass die Ladestation (6) bei einer positiven Prüfung dem Ladesteuergerät (14) Ladebereitschaft signalisiert.

10. Ladesystem (2) nach einem der vorangehenden Ansprüche,
**dadurch gekennzeichnet,**
- **dass** Abrechnungsmittel die Informationen zu der bestimmten elektrischen Energie empfangen und aus diesen Informationen abrechnungsrelevante Daten errechnen.

11. Verfahren zum Betreiben eines Ladesystems (2) umfassend,
- Erfassen eines Ladezustands einer Batterie (16) vor einem Beginn eines Ladevorgangs,
- Bestimmen des Verlaufs einer Ladekurve (46) für die Batterie (16) ausgehend von dem erfassten Ladezustand der Batterie (16) und
- Berechnen eines Ladeprofils, welches aus zumindest zwei Zeitintervallen (54) mit jeweils einer intervallspezifischen, konstanten elektrischen Leistung gebildet ist, wobei die Ladekurve (46) die jeweilige elektrische Leistung innerhalb eines Zeitintervalls begrenzt, wobei
- die jeweiligen Produkte aus Zeit (50) pro Zeitintervall und der intervallspezifischen Leistung (48) über zumindest zwei Intervalle aufsummiert werden und eine hieraus resultierende elektrische Energie bestimmen und Informationen zu der bestimmten elektrische Energie bereitgestellt wird, **dadurch gekennzeichnet, dass**
- die Ladekurve (46) das Ladeprofil als Einhüllende begrenzt, so dass zum Ende jedes Intervalls die intervallspezifische Leistung (56, 58) der durch die Ladekurve (46) vorgesehenen Leistung (48) entspricht.

12. Verfahren nach Anspruch 11,
**dadurch gekennzeichnet,**
- **dass** die aus dem Ladeprofil bestimmte elektrische Energie pro Zeitintervall in etwa der aus der Ladekurve (46) bestimmten elektrischen Energie für das entsprechende Zeitintervall entspricht.

13. Verfahren nach Anspruch 12,
**dadurch gekennzeichnet,**
- **dass** die Leistungsstufen eines Ladesteuergerätes (14) ermittelt werden und dass das Ladeprofil pro Zeitintervall eine elektrische Leistung (48) entsprechend einer der ermittelten Leistungsstufen enthält.

## Claims

1. Charging system (2) (2) comprising,
detection means (38) arranged to detect a state of charge of a battery (16) prior to a charging process,
determination means (40) arranged to determine a charging curve (46) for the battery (16) on the basis of the detected state of charge of the battery (16) and calculation means (42) arranged to calculate a charge profile, formed from at least two time intervals (54), each with an interval-specific, constant electrical power, wherein the charging curve (46) limits the respective electrical power (48) within a time interval, wherein
the calculation means (42) sum the respective products of time (50) per interval and the interval-specific power (48) over at least two intervals and determine the resulting energy therefrom and provide information about the determined electrical energy,
**characterized in that**
the charging curve (46) envelopes the charging profile, such that at the end of each interval the interval-specific power (52, 58) equals the power provided by the charging curve (46).

2. Charging system (2) according to claim 1,
**characterised in that**
the detection means (38) receive information on the state of charge from:
the battery (16) or,
a user interface (28).

3. Charging system (2) according to claim 1 or 2,
**characterised in that**
the determination means (40) receive information on a type of the battery (16), and
the determination means (40) depending on the type of battery (16) load a charging curve (46) from a memory (32).

4. Charging system (2) according to any one of the above claims,
**characterised in that**
the calculation means (42) receive information on a maximum charging current and a maximum power for one of the time intervals (54) depending on the maximum charging current.

5. Charging system (2) according to any one of the above claims,
**characterised in that**
the detection means (38), the determination means (40) and the calculation means (42) are arranged in a charging station (6) or in a mobile communication device.

6. Charging system (2) according to any one of the above claims,
**characterised in that**
the charge profile comprises a plurality of time intervals (54) and/or
**in that** for each time interval a maximum charging power is determined.

7. Charging system (2) according to any one of the above claims,
**characterised in that**
a charging station (6) receives the charge profile and depending on the charge profile received controls a charging control unit (14).

8. Charging system (2) according claim 7,
**characterised in that**
the charging station (6), with the help of the charge profile, determines a maximum charging current and **in that** the charging station (6) checks if the charging set connected to the charging station (6) and/or a charging control unit (14) is designed for the maximum current

9. Charging system (2) according to any one of the claims 7 or 8,
**characterised in that**
the charging station (6) receives a charging request according to a charge profile from a charging control unit (14), **in that** the charging station (6) checks if it is able to provide the maximum charging current known from the charge profile and **in that** the charging station (6) in the event of a positive check signals its readiness to charge to the charging control unit.

10. Charging system (2) according to any one of the above claims,
**characterised in that**
the calculation means receive the information on the determined electrical energy and from this information calculates billing-relevant data.

11. Method for operating a charging system (2) comprising,
detecting a state of charge of a battery (16) prior to the charging process,
determining the slope of a charging curve (46) for the battery (16) based on the detected state of charge of the battery (16) and
calculating a charge profile, which is formed from at least two time intervals (54) with a respective interval-specific constant electric power,
wherein the charging curve (46) limits the respective electrical power within a time interval,
wherein the respective products of time (50) per interval and interval specific power (48) are summed over at least two intervals and determine the resulting energy therefrom and information about the determined energy is provided
**characterized in that**
the charging curve (46) envelopes the charge profile, such that at the end of each interval the interval specific powers (56, 58) equals the power provided by the charging curve (46).

12. Method according to claim 11,
**characterised in that**
the electric energy per time interval determined from the charge profile per time interval corresponds approximately to the electrical energy determined from the charging curve (46) for the corresponding time interval.

13. Method according to any one of the above claims,
**characterised in that**
the power stages of a charging control unit (14) are determined and **in that** the charge profile per time interval contains an electrical power (48) corresponding to one of the power stages determined.

## Revendications

1. Système de charge (2) comprenant,
- des moyens de détection (38) conçus pour détecter un état de charge d'une batterie (16) avant le début d'une opération de chargement,
- des moyens de détermination (40) conçus pour déterminer une courbe de charge (46) pour la batterie (16) à partir de l'état de charge détecté de la batterie (16), et
- des moyens de calcul (42) conçus pour calculer un profil de charge, lequel est formé d'au moins deux intervalles de temps (54) ayant chacun une puissance électrique constante (48) spécifique à l'intervalle, où la courbe de charge (46) limite la puissance électrique (48) respective dans un intervalle de temps, où les moyens de calcul (42) additionnent les produits respectifs du temps (50) par intervalle de temps et de la puissance spécifique à l'intervalle (48) sur au moins deux intervalles et déterminent une énergie électrique qui en résulte et fournissent des informations sur l'énergie électrique déterminée,
**caractérisé**
- **en ce que** la courbe de charge (46) délimite le profil de charge comme une enveloppe, de sorte qu'à la fin de chaque intervalle, la puissance spécifique à l'intervalle (56, 58) correspond à la puissance (48) prévue par la courbe de charge (46).

2. Système de charge(2) selon la revendication 1,
**caractérisé**
- **en ce que** les moyens de détection (38) reçoivent une information sur l'état de charge de la batterie (16) ou d'une interface utilisateur (28).

3. Système de charge (2) selon la revendication 1 ou 2,
**caractérisé**
- **en ce que** les moyens de détermination (40) reçoivent une information sur un type de batterie (16), et
- **en ce que** les moyens de détermination (40) chargent une courbe de charge (46) à partir d'une mémoire (32) en fonction du type de batterie (16).

4. Système de charge (2) selon l'une des revendications précédentes, **caractérisé**
- **en ce que** les moyens de calcul (42) reçoivent une information sur un courant de charge maximal et déterminent une puissance maximale (48) pour un des intervalles de temps (54) en fonction du courant de charge maximal.

5. Système de charge (2) selon l'une des revendications précédentes, **caractérisé**
- **en ce que** les moyens de détection (38), les moyens de détermination (40) et les moyens de calcul (42) sont disposés dans une station de charge (6) ou dans un appareil de communication mobile.

6. Système de charge (2) selon l'une des revendications précédentes, **caractérisé**
- **en ce que** le profil de charge comprend une pluralité d'intervalles de temps (54) et/ou
- **en ce qu'**une puissance de charge maximale est déterminée pour chaque intervalle de temps.

7. Système de charge(2) selon l'une des revendications précédentes, **caractérisé**
- **en ce qu'**une station de charge (6) reçoit le profil de charge et commande un dispositif de commande de charge (14) en fonction du profil de charge reçu.

8. Système de charge(2) selon la revendication 7,
**caractérisé**
- **en ce que** la station de charge (6), à l'aide du profil de charge, détermine un courant de charge maximal et
- **en ce que** la station de charge (6) vérifie si un équipement de charge connecté à la station de charge (6) et/ou un dispositif de commande de charge (14) connecté à la station de charge (6) est conçu pour le courant de charge maximal.

9. Système de charge (2) selon l'une des revendications précédentes 7 ou 8, **caractérisé**
- **en ce que** la station de charge (6) reçoit une demande de charge correspondant à un profil de charge d'un dispositif de commande de charge (14),
- **en ce que** la station de charge (6) vérifie si elle peut fournir le courant de charge maximal connu à partir du profil de charge et
- **en ce que**, en cas de vérification positive, la station de charge (6) signale au dispositif de commande de charge (14) qu'elle est prête à chargé.

10. Système de charge(2) selon l'une des revendications précédentes,
**caractérisé**
- **en ce que** des moyens de facturation reçoivent l'information sur l'énergie électrique déterminée et calculent des données pertinentes pour la facturation à partir de cette information.

11. Procédé de fonctionnement d'un système de charge (2) comprenant :
- détecter un état de charge d'une batterie (16) avant un début d'un processus de charge,
- déterminer le tracé d'une courbe de charge (46) pour la batterie (16) sur la base de l'état de charge détecté de la batterie (16), et
- calculer un profil de charge, lequel est formé d'au moins deux intervalles de temps (54) ayant chacun une puissance électrique constante spécifique à l'intervalle,
- où la courbe de charge (46) limite la puissance électrique respective dans un intervalle de temps,
- où les produits respectifs du temps (50) par intervalle de temps et de la puissance spécifique à l'intervalle (48) sont additionnés sur au moins deux intervalles et une énergie électrique en résultant étant déterminée, et des informations sur l'énergie électrique déterminée sont mises à disposition,
**caractérisé**
- **en ce que** la courbe de charge (46) délimite le profil de charge comme une enveloppe, de sorte qu'à la fin de chaque intervalle, la puissance spécifique à l'intervalle (56, 58) corresponde à la puissance (48) prévue par la courbe de charge (46).

12. Procédé selon la revendication 11,
**caractérisé**
- **en ce que** l'énergie électrique par intervalle de temps déterminé à partir du profil de charge correspond approximativement à l'énergie électrique pour l'intervalle de temps correspondant déterminé à partir de la courbe de charge (46).

13. Procédé selon la revendication 12,
**caractérisé**
- **en ce que** les niveaux de puissance d'un dispositif de commande de charge (14) sont déterminés, et
- **en ce que** le profil de charge contient une puissance électrique (48) pour chaque intervalle de temps, laquelle correspond à l'un des niveaux de puissance déterminés.
